# EUROPEAN PATENT APPLICATION

(11) **EP 4 848 312 A1**
(43) Date of publication of application: **02.12.2026**
(21) Application number: 25745146.8
(22) Date of filing: 22.01.2025
(51) Int. Cl.: H01B 7/00, B32B 15/08, H01B 5/02

(54) **METAL RESIN ASSEMBLY, BUS BAR, AND METHOD FOR MANUFACTURING SAME**

(30) Priority: 23.01.2024 JP 2024007873
(71) Applicant: Mitsubishi Chemical Corporation, Tokyo 100-8251 (JP)
(72) Inventor: KUBOKAWA Keisuke, Tokyo 100-8251 (JP); KIDA Aika, Tokyo 100-8251 (JP)
(74) Representative: Hoffmann Eitle
(86) International application number: PCT/JP2025/001852
(87) International publication number: WO 2025/159105

(57) **Abstract**

The present invention is directed to providing a metal-resin joined body that improves electrical characteristics caused by a skin effect and allows a large current to flow therethrough even in a case of an alternating current (AC). A metal-resin joined body including n (where n is an integer of 1 or more) constituent units (PM) in each of which a resin layer (P) and a metal layer (M) are laminated, or n constituent units (PMP) in each of which a resin layer (P), a metal layer (M), and a resin layer (P) are laminated, wherein two or more metal layers (M) are included in the metal-resin joined body. A bus bar including the metal-resin joined body. A method for producing the metal-resin joined body.

## Description

### Technical Field

The present invention relates to a metal-resin joined body, a bus bar, and a method for producing the same.

### Background Art

A bus bar is a conductor that efficiently supplies a large amount of current to each part with a small loss, and is widely used as a substitute for a cable or an electric conductor (Patent Literatures 1 to 3).

For example, a large current flows through an in-vehicle bus bar, and depending on an electronic component, an electronic device, electronic equipment, or electric equipment, not only a direct current (DC) but also an alternating current (AC) may be applied to the bus bar.

### Citation List

### Patent Literature

Patent Literature 1: JP 2015-170755 A
Patent Literature 2: JP 2017-142983 A
Patent Literature 3: JP 2020-43031 A

### Summary of Invention

### Technical Problem

In a case of causing a large current to flow through a bus bar, it is necessary to increase the cross-sectional area of a metal material of the bus bar to reduce the resistance of the metal material. However, in a case of causing an alternating current (AC) to flow through the bus bar, even when the cross-sectional area of the metal material of the bus bar is increased, a phenomenon called a "skin effect" in which a current flows only near the surface of the metal material occurs, or an energy loss due to an increase in inductance occurs, and thus it is difficult to cause a large current to flow through the bus bar.

The present invention has been made in view of the above issues, and an object thereof is to provide a metal-resin joined body in which electrical characteristics due to a skin effect are improved and through which a large current can be applied even when the current is an alternating current (AC).

### Solution to Problem

As a result of intensive studies, the present inventors have found that the above issues can be solved by adopting a metal-resin joined body having a configuration in which a plurality of resin layers and metal layers are laminated in a thickness direction, and have completed the following present invention.

That is, the present invention provides the following [1] to [25].
[1] A metal-resin joined body including n (where n is an integer of 1 or more) constituent units (PM) in each of which a resin layer (P) and a metal layer (M) are laminated, or n constituent units (PMP) in each of which a resin layer (P), a metal layer (M), and a resin layer (P) are laminated,
   wherein
   two or more metal layers (M) are included in the metal-resin joined body.
[2] The metal-resin joined body according to [1], wherein a total thickness of the metal layers (M) is 56% or more with respect to a total thickness of the metal-resin joined body.
[3] The metal-resin joined body according to [1] or [2], wherein in the constituent unit (PM) or the constituent unit (PMP), the resin layer (P) and the metal layer (M) are joined directly or with an adhesion aid film interposed therebetween.
[4] The metal-resin joined body according to [3], wherein the adhesion aid film has a thickness of 1 µm or less.
[5] The metal-resin joined body according to [3] or [4], wherein a weight-average molecular weight of a component constituting the adhesion aid film is 2000 or less.
[6] The metal-resin joined body according to any one of [3] to [5], wherein the adhesion aid film includes a structural unit derived from a silane coupling agent as a main component.
[7] The metal-resin joined body according to any one of [1] to [6], wherein an inductance value when an alternating current of 100 kHz is applied is 90% or less, as compared with an inductance value when an alternating current of 100 kHz is applied to the metal layer alone.
[8] The metal-resin joined body according to any one of [1] to [7], wherein the metal layer (M) contains copper or a copper alloy.
[9] The metal-resin joined body according to any one of [1] to [8], wherein the metal layer (M) contains aluminum or an aluminum alloy.
[10] The metal-resin joined body according to any one of [1] to [9], wherein the resin layer (P) contains a polyphenylene sulfide-based resin as a main component.
[11] The metal-resin joined body according to any one of [1] to [10], wherein the resin layer (P) contains a polyamide-based resin as a main component.
[12] The metal-resin joined body according to any one of [1] to [11], wherein the resin layer (P) contains a polypropylene-based resin as a main component.
[13] The metal-resin joined body according to any one of [1] to [12], wherein the resin layer (P) has a thickness of 1 to 100 µm for one layer.
[14] The metal-resin joined body according to any one of [1] to [13], wherein the metal layer (M) has a thickness of 0.05 to 2.0 mm for one layer.
[15] The metal-resin joined body according to any one of [1] to [14], wherein a total thickness of the metal-resin joined body is 0.5 mm or more.
[16] The metal-resin joined body according to any one of [1] to [15], wherein the metal-resin joined body is a bus bar.
[17] A bus bar including the metal-resin joined body described in any one of [1] to [16].
[18] A method for producing the metal-resin joined body described in any one of [1] to [16], the method including
   subjecting a metal layer (M) and a resin layer (P) to thermocompression bonding directly or with an adhesion aid film interposed therebetween to produce a constituent unit (PM) or a constituent unit (PMP).
[19] The method for producing a metal-resin joined body according to [18], the method including:
   (1) subjecting a surface of at least one of the metal layer (M) or the resin layer (P) to surface treatment with a silane coupling agent treatment liquid to form an adhesion aid film; and
   (2) laminating the resin layer (P) not subjected to surface treatment on a surface of the metal layer (M) subjected to surface treatment, or laminating the metal layer (M) not subjected to surface treatment on the resin layer (P) subjected to surface treatment, and performing thermocompression bonding.
[20] The method for producing a metal-resin joined body according to [18] or [19], the method further including laminating the constituent unit (PM) or the constituent unit (PMP).
[21] A laminate for producing a bus bar, the laminate including one resin layer (P) and one metal layer (M) joined directly or with an adhesion aid film interposed therebetween.
[22] The laminate for producing a bus bar according to [21], the laminate further including another metal layer (M) joined onto the resin layer (P) directly or with an adhesion aid film interposed therebetween.
[23] The laminate for producing a bus bar according to [21] or [22], wherein the resin layer (P) and the metal layer (M) are joined with an adhesion aid film interposed therebetween, and
   the adhesion aid film has a thickness of 1 µm or less.
[24] The laminate for producing a bus bar according to any one of [21] to [23], wherein a weight-average molecular weight of a component constituting the adhesion aid film is 2000 or less.
[25] The laminate for producing a bus bar according to any one of [21] to [24], wherein the adhesion aid film contains a structural unit derived from a silane coupling agent as a main component.
   [A] A metal-resin joined body for use for a bus bar, the metal-resin joined body including n (where n is an integer of 1 or more) constituent units in each of which a resin layer (P) and a metal layer (M) are laminated,
      wherein
      two or more metal layers (M) are included in the metal-resin joined body.
   [B] Use of a metal-resin joined body for producing a bus bar, wherein the metal-resin joined body includes n (where n is an integer of 1 or more) constituent units in each of which a resin layer (P) and a metal layer (M) are laminated, and two or more metal layers (M) are included in the metal-resin joined body.
   [C] A method for producing a bus bar, the method including using a metal-resin joined body including n (where n is an integer of 1 or more) constituent units in each of which a resin layer (P) and a metal layer (M) are laminated,
      wherein
      two or more metal layers (M) are included in the metal-resin joined body.

### Advantageous Effects of Invention

This makes it possible to produce a bus bar through which a large current can be applied even when the current is an alternating current.

### Brief Description of Drawings

FIG. 1 is a view illustrating a configuration example of a metal-resin joined body.
FIG. 2 is a view illustrating a configuration example of the metal-resin joined body.
FIG. 3 is a view illustrating a configuration example of the metal-resin joined body.
FIG. 4 is a view illustrating a configuration example of the metal-resin joined body.
FIG. 5 is a view illustrating a configuration example of the metal-resin joined body.
FIG. 6 is a view illustrating a configuration example of the metal-resin joined body.
FIG. 7 is a view illustrating a configuration example of the metal-resin joined body.

### Description of Embodiments

Next, embodiments of the present invention will be described. However, the present invention is not limited to the embodiments described below. The present invention can be implemented with any modifications within a scope that does not depart from the gist of the present invention. In the present specification, unless otherwise specified, the expression "from X to Y" (X and Y are any numerals) encompasses the meaning of "X or more and Y or less" as well as the meaning of "preferably more than X" or "preferably less than Y". When the expression "X or more" (X is any numeral) or "Y or less" (Y is any numeral) is used, the intention thereof includes "preferably more than X" or "preferably less than Y". The terms "film" and "sheet" used in the following description are not clearly distinguished from each other, and what is referred to as "film" also encompasses a "sheet", and what is referred to as "sheet" also encompasses a "film".

### Metal-Resin Joined Body

A present embodiment relates to a metal-resin joined body including n (where n is an integer of 1 or more) constituent units (PM) in each of which a resin layer (P) and a metal layer (M) are laminated, or n constituent units (PMP) in each of which a resin layer (P), a metal layer (M), and a resin layer (P) are laminated. In the present specification, the constituent unit is a unit including one metal layer (M) and at least one resin layer (P). That is, examples of the constituent unit include a constituent unit (PM) in which a resin layer (P) and a metal layer (M) are laminated, and a constituent unit (PMP) in which a resin layer (P), a metal layer (M), and a resin layer (P) are laminated. As described above, the present embodiment relates to a metal-resin joined body including n (where n is an integer of 1 or more) constituent units (PM) in each of which a resin layer (P) and a metal layer (M) are laminated or n constituent units (PMP) in each of which a resin layer (P), a metal layer (M), and a resin layer (P) are laminated, wherein two or more metal layers (M) are included in the metal-resin joined body.

The metal-resin joined body of the present embodiment has the above-described configuration, and thus has a configuration in which the resin layer (P) and the metal layer (M) are alternately laminated. That is, in the metal-resin joined body including the resin layer (P) and the metal layer (M) alternately laminated, the resin layer (P) and the metal layer (M) adjacent to each other are the constituent unit (PM) referred to in the present specification, and the layer configuration in which the resin layer (P), the metal layer (M), and the resin layer (P) are laminated in this order is the constituent unit (PMP) referred to in the present specification. The metal-resin joined body of the present invention naturally encompasses not only a metal-resin joined body formed by laminating the constituent units, but also a metal-resin joined body formed by simply alternately laminating the resin layer (P) and the metal layer (M).

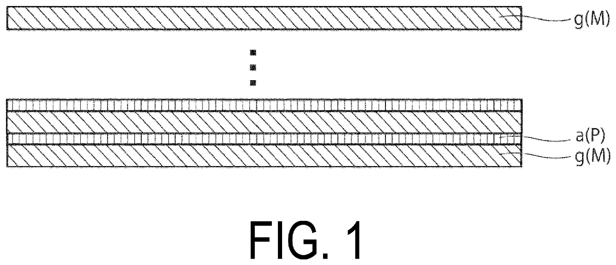

As illustrated in FIG. 1, as the constituent unit constituting the metal-resin joined body, n (where n is an integer of 1 or more) constituent units (PM) each including one resin layer (P) and one metal layer (M) laminated. A metal-resin joined body is produced by laminating such n constituent units (PM) and further laminating a metal layer (M) in such a manner that the outermost layer is the metal layer (M), as necessary.

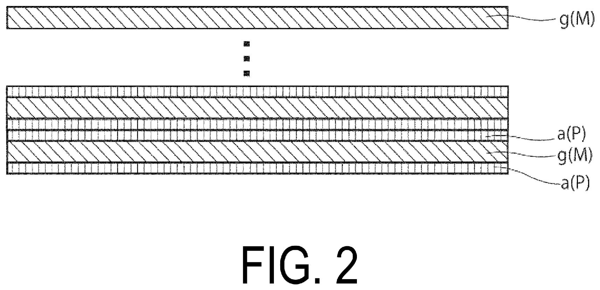

The metal-resin joined body may have a constituent unit (PMP). As illustrated in FIG. 2, the constituent unit constituting the metal-resin joined body may be those including n (where n is an integer of 1 or more) constituent units (PMP) each including a resin layer (P), a metal layer (M), and a resin layer (P) laminated in this order. In this case, when one constituent unit (PMP) and another constituent unit (PMP) are laminated, the resin layers (P) are laminated to be in contact with each other.

Note that the metal-resin joined body may include both the constituent unit (PM) and the constituent unit (PMP). As illustrated in FIGS. 1 and 2, the plurality of metal layers (M) included in the metal-resin joined body preferably have the same dimension, and the plurality of resin layers (P) also preferably have the same dimension. The metal layer (M) and the resin layer (P) preferably have the same dimension.

In the present embodiment, by adopting the configuration in which the plurality of resin layers (P) and the plurality of metal layers (M) are laminated in the thickness direction, the influence of the skin effect is suppressed, and the energy loss due to an increase in inductance is suppressed, which makes it possible to produce a metal-resin joined body through which a large current can be applied.

The electrical characteristics of the metal-resin joined body can be evaluated by measuring a current value, an inductance value, or the like by a known method. Specifically, in the present embodiment, the metal-resin joined body is connected to an LCZ meter or an LCR meter as a sample to measure the inductance value. A smaller inductance value indicates that a resistance is smaller and a larger current flows.

The inductance value when an alternating current of 100 kHz is applied to the metal-resin joined body of the present embodiment is preferably 90% or less, more preferably 85% or less, still more preferably 80% or less, still even more preferably 70% or less, yet still even more preferably 60% or less, and particularly preferably 50% or less, as compared with the inductance value when an alternating current of 100 kHz is applied to the metal layer alone included in the metal-resin joined body.

A smaller inductance value indicates that a resistance is smaller and a larger current flows. It is considered that the effect of increasing the current of the metal-resin joined body is increased as the number of laminated layers of the metal layers and the resin layers is increased. In a case where the metal-resin joined body and the metal layer alone have the same volume, the metal-resin joined body allows a larger current to flow through the metal-resin joined body, and thus it is considered that the volume can be reduced by the amount of the larger current, which can make the component compact.

The current density of the metal-resin joined body in the present embodiment is preferably 0.5 A/mm² or more, more preferably 1.0 A/mm² or more, and still more preferably 1.2 A/mm² or more. The current density of the metal-resin joined body is preferably 4.0 A/mm² or less.

In the present embodiment, in the constituent unit (PM) or the constituent unit (PMP), the resin layer (P) and the metal layer (M) are preferably joined directly or with an adhesion aid film interposed therebetween. In a case where the resin layer (P) and the metal layer (M) are directly joined to each other, no other layer is present between the resin layer (P) and the metal layer (M). In addition, in the present specification, the adhesion aid film refers to a coating film provided between the resin layer (P) and the metal layer (M), and such a coating film is distinguished from an adhesive layer provided for joining the resin layer and the metal layer. Specifically, the thickness of the adhesion aid film is preferably 1 µm or less, more preferably 0.8 µm or less, still more preferably 0.6 µm or less, still even more preferably 0.5 µm or less, yet still even more preferably 0.3 µm or less, and particularly preferably 0.1 µm or less.

More specifically, the weight-average molecular weight of the component constituting the adhesion aid film is preferably 2000 or less, more preferably 1800 or less, still more preferably 1600 or less, and particularly preferably 1400 or less.

The adhesion aid film preferably contains a structural unit derived from a silane coupling agent as a main component. The silane coupling agent is an organosilicon compound having an organic functional group and a hydrolyzable group such as an alkoxy group in one molecule. Examples of the silane coupling agent include epoxy group-containing compounds, such as 3-glycidoxypropylmethyldimethoxysilane, 3-glycidoxypropyltrimethoxysilane, 3-glycidoxypropylmethyldiethoxysilane, 3-glycidoxypropyltriethoxysilane, and 2-(3,4-epoxycyclohexyl)ethyltrimethoxysilane; vinyl group-containing compounds, such as vinyltrimethoxysilane and vinyltriethoxysilane; styryl group-containing compounds, such as p-styryltrimethoxysilane and p-styryltriethoxysilane; (meth)acryl group-containing compounds, such as 3-(meth)acryloxypropyltrimethoxysilane, 3-(meth)acryloxypropyltriethoxysilane, 3-(meth)acryloxypropylmethyldimethoxysilane, and 3-(meth)acryloxypropylmethyldiethoxysilane; amino group-containing compounds, such as 3-aminopropyltrimethoxysilane, 3-aminopropyltriethoxysilane, N-2-(aminoethyl)-3-aminopropyltrimethoxysilane, N-2-(aminoethyl)-3-aminopropyltriethoxysilane, N-2-(aminoethyl)-3-aminopropylmethyldimethoxysilane, N-2-(aminoethyl)-3-aminopropylmethyldiethoxysilane, 3-triethoxysilyl-N-(1,3-dimethylbutylidene)propylamine, N-phenyl-3-aminopropyltrimethoxysilane, and N-phenyl-3-aminopropyltriethoxysilane; isocyanurate group-containing compounds, such as tris(trimethoxysilylpropyl) isocyanurate and tris(triethoxysilylpropyl) isocyanurate; and mercapto group-containing compounds, such as 3-mercaptopropyltrimethoxysilane, 3-mercaptopropyltriethoxysilane, 3-mercaptopropylmethyldimethoxysilane, and 3-mercaptopropylmethyldiethoxysilane.

Among the above compounds, from the viewpoint of achieving both the adhesiveness to the metal layer (M) and the adhesiveness to the resin layer (P), an epoxy group-containing silane coupling agent, a double bond-containing silane coupling agent such as a vinyl group or a (meth)acryl group, and an amino group-containing silane coupling agent are more preferable. One silane coupling agent may be used alone, or two or more thereof may be used in combination.

### Resin Layer (P)

The metal-resin joined body of the present embodiment has a resin layer (P). A resin known in the related art can be used as a resin constituting the resin layer (P). Note that in the present embodiment, the resin layer (P) is a layer different from a so-called adhesive layer. For example, the melting point of the resin constituting the resin layer (P) is preferably 130°C or higher.

Specific examples of the resin constituting the resin layer (P) include polyethylene, polypropylene, polyvinyl chloride, polystyrene, polyvinylidene chloride, polyvinyl alcohol, an ethylene-vinyl alcohol copolymer, polymethylpentene, polyphenylene ether, polyethylene terephthalate, polybutylene terephthalate, polyacetal, polymethyl methacrylate, polycarbonate, ABS, polyarylate, polyetherimide, polyamideimide, polysulfone, polyether sulfide, polyphenylene sulfide, polyaryletherketone, a liquid crystal polymer, and copolymers and mixtures thereof. Among these, particularly from the viewpoint of improving the adhesiveness to the metal layer and/or the heat resistance of the resin layer, at least one selected from the group consisting of polycarbonate, aliphatic polyamide, aromatic polyamide, polypropylene, polyphenylene ether, polyether sulfide, polyphenylene sulfide, polyetherimide, and polysulfone is preferable, at least one selected from the group consisting of aliphatic polyamide, aromatic polyamide, polyphenylene sulfide, and polypropylene is more preferable, and at least one selected from the group consisting of aliphatic polyamide, modified polyphenylene sulfide, and polypropylene is still more preferable.

The resin layer (P) preferably contains a polyphenylene sulfide-based resin as a main component, a polyamide-based resin as a main component, or a polypropylene-based resin as a main component. In the present specification, the "main component" refers to a resin contained in an amount of 50 mass% or more, preferably 60 mass% or more, more preferably 70 mass% or more, still more preferably 80 mass% or more, and particularly preferably 90 mass% or more, with respect to the total mass of the resin layer. Note that the polyphenylene sulfide-based resin also includes modified polyphenylene sulfide, in addition to unmodified polyphenylene sulfide. The polyamide-based resin includes aromatic polyamide and aliphatic polyamide, and the polyamide may be modified polyamide. The polypropylene-based resin also includes modified polypropylene, in addition to unmodified polypropylene.

Among these, the resin layer (P) preferably contains a polyphenylene sulfide-based resin as a main component. The melt viscosity of the polyphenylene sulfide-based resin is preferably 250 Pa·s or more and 2000 Pa·s or less.

The polyphenylene sulfide-based resin has a repeating unit represented by the following formula (1). The repeating unit is one in which a sulfur atom is attached to one benzene ring. n is an integer of 2 or more, preferably 80 to 1000, more preferably 100 to 700, and still more preferably 150 to 500.

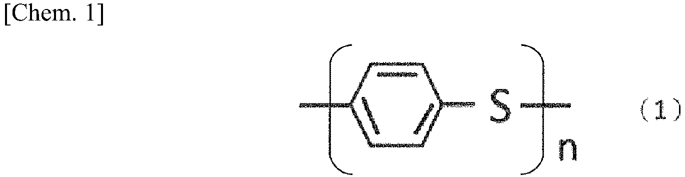

The polyphenylene sulfide-based resin preferably has a substantially linear structure, from the viewpoint of film formability, physical properties, and the like. However, as long as these physical properties are not substantially deteriorated, for example, a polymerized cross-linked product produced by using an effective amount of a cross-linking agent (for example, trihalobenzene) at the time of polymerization, or a thermally cross-linked product produced by cross-linking a polymer by heat treatment in the presence of oxygen or the like can also be used.

The polyphenylene sulfide-based resin is also preferably modified polyphenylene sulfide. Examples of the modified polyphenylene sulfide include modified polyphenylene sulfide into which a functional group such as an epoxy group, a carboxyl group, an acid anhydride group, an alcoholic hydroxyl group, an amino group, or an alkoxysilyl group is introduced by graft-reacting unmodified polyphenylene sulfide with a modifying agent having both a double bond and a reactive functional group such as glycidyl methacrylate, glycidyl acrylate, acrylic acid, maleic anhydride, hydroxyethyl methacrylate, hydroxyethyl acrylate, hydroxypropyl methacrylate, acrylamide, N-[4-(2,3-epoxypropoxy)-3,5-dimethylphenylmethyl]acrylamide, or vinyltrimethoxysilane.

As the modified polyphenylene sulfide, modified polyphenylene sulfide into which a functional group such as a carboxyl group or an amino group is introduced by a melt reaction of a modifying agent having both a disulfide group and a reactive functional group such as 4,4'-dithiodi(n-butyric acid), dithiodiacetic acid, dithiodianiline, or dithiodibenzoic acid can also be used. Furthermore, as the modified polyphenylene sulfide, modified polyphenylene sulfide into which a functional group such as a carboxyl group or an amino group is introduced by a melt reaction of a modifying agent having both a mercapto group and a reactive functional group such as thiomalic acid, mercaptoacetic acid, mercaptopropionic acid, or aminothiophenolmercaptobenzoic acid can be used, and modified polyphenylene sulfide reacted with a silane coupling agent such as γ-glycidoxypropyltrimethoxysilane, γ-glycidoxypropylmethyldiethoxysilane, γ-mercaptopropyltrimethoxysilane, or γ-aminopropyltriethoxysilane can also be used.

The polyphenylene sulfide-based resin constituting the resin layer (P) is also preferably copolymerized polyphenylene sulfide. Examples of the copolymerized polyphenylene sulfide include copolymerized polyphenylene sulfide produced by copolymerizing a functional group-containing monomer, which is copolymerized polyphenylene sulfide containing an amino group, a hydroxyl group, a carboxyl group, or the like. Furthermore, modified copolymerized polyphenylene sulfide into which a functional group such as a carboxyl group, an acid anhydride group, a hydroxyl group, or an amino group is introduced by a melt reaction of a modifying agent having both a sulfonic acid group or a nitro group and a reactive functional group such as 4-hydroxy-1-naphthalenesulfonic acid, 3-amino-4-hydroxybenzenesulfonic acid, 4-aminobenzenesulfonic acid, 3-sulfobenzoic acid, 4-sulfophthalic acid, 4-nitronaphthalene-1,8-dicarboxylic anhydride, 4-nitrophthalic anhydride, or nitrobenzoic acid can also be used. For example, by changing the chemical structure of a polyphenylene sulfide precursor to be copolymerized with a normal polyphenylene sulfide precursor, good physical properties such as adhesiveness to the metal layer may be provided, which is more preferable.

The resin layer (P) may be a blend of the polyphenylene sulfide-based resin and another resin component. In this case, the type of the other resin component is not particularly limited, and examples thereof include polyethylene, polypropylene, polyvinyl chloride, polystyrene, polyvinylidene chloride, polyvinyl alcohol, an ethylene-vinyl alcohol copolymer, polymethylpentene, polyphenylene ether, polyethylene terephthalate, polybutylene terephthalate, polyacetal, aliphatic polyamide, polymethyl methacrylate, polycarbonate, ABS, aromatic polyamide, polyarylate, polyetherimide, polyamideimide, polysulfone, polyether sulfide, polyaryletherketone, a liquid crystal polymer, and copolymers thereof and mixtures thereof. Among these, particularly from the viewpoint of improving the adhesiveness to the metal layer and improving the adhesiveness to the resin layer (for example, polyphenylene sulfide) provided on the outermost layer, at least one selected from the group consisting of polycarbonate, polypropylene, polyphenylene ether, polyether sulfide, polyetherimide, and polysulfone is preferable, and polyphenylene ether is more preferable.

The resin layer (P) may contain a polyamide-based resin as a main component. As the polyamide-based resin, an aliphatic polyamide or an aromatic polyamide can be used, but among them, an aliphatic polyamide is preferably used. As the aliphatic polyamide, a ring-opening polymerized product of cyclic lactam or a polycondensate of an aminocarboxylic acid can be preferably used, and examples thereof include polyamide 4, polyamide 5, polyamide 6, polyamide 7, polyamide 8, polyamide 9, polyamide 10, polyamide 11, and polyamide 12. Furthermore, a polycondensate of a dicarboxylic acid and diamine can also be suitably used, and for example, polyamide 46, polyamide 410, polyamide 412, polyamide 66, polyamide 610, polyamide 612, polyamide 96, polyamide 910, polyamide 912, polyamide 106, polyamide 1010, polyamide 1012, or the like can also be used. Any copolymerization method such as random copolymerization, block copolymerization, or graft copolymerization may be used.

Among the aliphatic polyamides, polyamide 6 (nylon 6), polyamide 66 (nylon 66), and polyamide 6,66 are preferable because of their excellent balance of heat resistance, film formability, and mechanical strength, and polyamide 6 (nylon 6) is particularly preferable because of its high versatility and economic efficiency. The relative viscosity (96% sulfuric acid) of polyamide 6 (nylon 6) is preferably 1.0 to 5.0, more preferably 2.0 to 4.5, and particularly preferably 2.5 to 4.0. When the relative viscosity of the polyamide 6 (nylon 6) is within the above range, the resin layer (P) having excellent workability and mechanical strength can be produced.

The resin layer (P) may contain a polypropylene-based resin as a main component. The polypropylene-based resin may be modified polypropylene. Examples of the modified polypropylene include silane-modified polypropylene, acid-modified polypropylene, a copolymer of propylene and another polar monomer, and polypropylene modified with a halogen element. Examples of the polypropylene modified with a halogen element include polypropylene into which a halogen element such as fluorine, chlorine, or bromine is introduced. The PP-based resin may be a copolymer such as a block copolymer or a random copolymer.

From the viewpoint of heat resistance, the melting point of the resin used for the resin layer (P) is preferably 100°C or higher, more preferably 150°C or higher, and still more preferably 200°C or higher.

### Thickness of Resin Layer (P)

The thickness of one resin layer (P) is preferably 1 µm or more, more preferably 5 µm or more, and particularly preferably 10 µm or more. On the other hand, the upper limit of the thickness of the resin layer (P) is preferably 100 µm or less in consideration of handleability. In the present embodiment, the metal-resin joined body preferably includes a plurality of resin layers (P), and the thicknesses of the plurality of resin layers (P) are preferably the same, but may be different. By setting the thickness of the resin layer (P) within the above range, the adhesion between the resin layer (P) and the metal layer (M) can be enhanced, and further, the effect of thinning and weight reduction of the metal-resin joined body is easily achieved.

### Proportion of Resin Layer (P) in Metal-Resin Joined Body

The proportion of the thickness of the resin layer (P) (total thickness of the resin layers) relative to the metal-resin joined body is preferably 45% or less, and more preferably 40% or less. On the other hand, the lower limit of the proportion of the thickness of the resin layer (P) (the total thickness of the resin layers) is 5% or more, and preferably 10% or more, from the viewpoint of handleability. When the proportion of the thickness of the resin layer (P) (the total thickness of the resin layers) is within the above range, it is possible to effectively suppress heat generation due to energization while providing the effect of thinning and weight reduction of the metal-resin joined body.

Note that each resin layer (P) is preferably a single layer, but may be a multilayer. In a case where the resin layer (P) is a multilayer, the same type of resin may be used for each resin layer (P), or different resins or various additives may be blended in each resin layer (P). In a case of forming the resin layer (P) of multilayer, an adhesive layer or the like may be provided between layers. Even in the case where the resin layer (P) is a multilayer, the thickness of each resin layer (P) is preferably 1 µm or more, more preferably 5 µm or more, and particularly preferably 10 µm or more. The thickness of each resin layer (P) is preferably 100 µm or less.

### Additional Additive

The resin layer (P) may contain an additional additive within a range not impairing the gist of the present invention. Examples of the additional additive include various additives such as a heat stabilizer, an antioxidant, an ultraviolet absorber, a light stabilizer, an antibacterial/antifungal agent, an antistatic agent, a lubricant, a pigment, a dye, and a filler. The content of the additional additive is preferably 10 mass% or less, and more preferably 5 mass% or less, with respect to the total mass of the resin layer (P).

### Method for Producing Resin Layer (P)

As a method for producing the resin layer (P), a general molding method can be adopted. For example, the resin layer can be formed into a desired shape such as a film shape or a sheet shape by extrusion molding, injection molding, casting molding such as melt casting, press molding, or the like. In each molding method, the apparatus and processing conditions are not particularly limited, and a known method can be adopted. To improve the adhesiveness, the surface of the resin layer may be subjected to various types of surface treatment such as corona treatment and coating, or treatment such as metal vapor deposition.

### Metal Layer (M)

The metal-resin joined body of the present embodiment has the metal layer (M). As the metal constituting the metal layer, copper or a copper alloy, or aluminum or an aluminum alloy is preferably used from the viewpoint of electrical characteristics. Specific examples of copper or a copper alloy include, but are not particularly limited to, high-purity copper such as tough pitch copper, oxygen-free copper, and phosphorus deoxidized copper, and copper alloys such as brass, phosphor bronze, Cu-Fe-based alloys, Cu-Fe-P-based alloys, and Cu-Ni-Si-based alloys. Among these, in particular, from the viewpoint of further improving the electrical characteristics, the copper or copper alloy preferably has a copper purity of 99.90% or more.

As a specific example of the aluminum alloy, a non-heat-treated type or heat-treated type aluminum alloy specified in JIS or conforming to JIS can be appropriately selected and used. Examples of the non-heat-treated type aluminum alloy include pure aluminum (1000 series), an Al-Mn-based alloy (3000 series), an Al-Si-based alloy (4000 series), and an Al-Mg-based alloy (5000 series). Examples of the heat-treated type aluminum alloy include Al-Cu-Mg-based alloys (2000 series), Al-Mg-Si-based alloys (6000 series), and Al-Zn-Mg-based alloys (7000 series).

In addition, in the metal-resin joined body, the type of the metal layer to be combined is not limited, and a plurality of (two or more types of) different metal layers may be combined, for example, a copper layer and an aluminum layer may be used in combination, and the type of the metal layer can be appropriately selected depending on the purpose.

The metal layer (M) is preferably constituted by a metal plate made of the above-described metal. The content of the metal in the metal layer (M) is 80 mass% or more, preferably 90 mass% or more, more preferably 95 mass% or more, and still more preferably 99 mass% or more, with respect to the total mass of the metal layer.

The surface of the metal layer (M) may be plated with one or a plurality of metals or the like to increase the adhesive force to the resin layer (P) or to prevent oxidation of the surface. In addition, an inorganic oxide coating film may be provided on the surface of the metal layer (M), and a chemical conversion coating film may be provided by performing treatment represented by, for example, chromic acid treatment, phosphoric acid treatment, chromic acid/phosphoric acid treatment, electrolytic chromic acid treatment, chromate treatment, alumite, or the like. Furthermore, as other treatments, chemical treatment such as etching, painting, resin coating, and embossing, physical treatment, and the like may be performed.

### Thickness of Metal Layer (M)

The thickness of the metal layer (M) is preferably 0.05 mm or more, and more preferably 0.10 mm or more. In addition, the thickness of the metal layer (M) is preferably 2.0 mm or less, and more preferably 1.5 mm or less. The thicknesses of the plurality of metal layers (M) constituting the metal-resin joined body are preferably the same, but may be different. When the thickness of the metal layer (M) is within the above range, the bending workability becomes good. Furthermore, when the thickness of the metal layer (M) is within the above range, the effect of thinning and weight reduction of the metal-resin joined body is likely to be provided, and further, the skin effect can be effectively suppressed.

### Proportion of Metal Layer (M) in Metal-Resin Joined Body

When the proportion of the thickness of the metal layer (M) (the total thickness of the metal layers) is within the above range, a bus bar through which a large current can be applied while suppressing the influence of the skin effect can be produced.

Note that the proportion of the thickness of the metal layer (M) (the total thickness of the metal layers) can be calculated by the following equation. 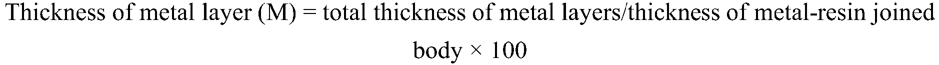 Thickness of metal layer (M) = total thickness of metal layers/thickness of metal-resin joined body × 100

### Method for Producing Metal-Resin Joined Body

The metal-resin joined body can be produced by, for example, the following production method.

The method for producing a metal-resin joined body preferably has a step of producing a constituent unit by thermocompression bonding of the metal layer (M) and the resin layer (P) directly or with an adhesion aid film interposed therebetween. Specifically, the method for producing a metal-resin joined body preferably has a step of producing the constituent unit (PM) or the constituent unit (PMP) by thermocompression bonding of the metal layer (M) and the resin layer (P) directly or with an adhesion aid film interposed therebetween (hereinafter, the step of producing the constituent unit (PM) or the constituent unit (PMP) is also simply referred to as a "step of producing a constituent unit"). In the step of producing the constituent unit, the resin is melted by setting the thermocompression bonding temperature to the melting point of the resin layer (P) or higher, and the resin layer (P) can be bonded to the metal layer.

In the step of producing the constituent unit, the metal layer (M) and the resin layer (P) are thermocompression-bonded directly or with the adhesion aid film interposed therebetween. In the thermocompression bonding step, it is preferable to perform heat press bonding or inter-roll thermocompression bonding. Note that in the present specification, the heat press bonding is a method of fusing the resin layer (P) and the metal layer (M) cut into sheets, for example, by applying pressure from above and below with a heat press machine, and the inter-roll thermocompression bonding is a method of fusing the resin layer (P) and the metal layer (M) by applying thermocompression bonding by continuously passing the resin layer (P) and the metal layer (M) wound in a coil or roll shape through a pair of rolls while feeding the resin layer (P) and the metal layer (M). The metal layer (M) and the resin layer (P) are thermocompression-bonded by heat press bonding or inter-roll thermocompression bonding, thereby producing the constituent unit (PM) or the constituent unit (PMP).

The thermocompression bonding temperature in the step of producing the constituent unit is preferably the melting point of the resin constituting the resin layer (P) + 5°C or higher, more preferably the melting point of the resin + 10°C or higher, and still more preferably the melting point of the resin + 20°C or higher. This allows the resin layer (P) to be sufficiently melted, and the adhesive force with the metal layer (M) to be enhanced. In a case of heat press bonding, the thermocompression bonding time in the step of producing the constituent unit is preferably 1 minute or longer, more preferably 2 minutes or longer, and still more preferably 3 minutes or longer. From the viewpoint of productivity, the thermocompression bonding time in the step of producing the constituent unit is preferably 20 minutes or shorter, more preferably 15 minutes or shorter, and still more preferably 10 minutes or shorter. On the other hand, in the case of the inter-roll thermocompression bonding, the thermocompression bonding can be performed in a shorter time than in the case of the heat press bonding, depending on the line speed. Thus, the thermocompression bonding time is in a range of 1 second to 1 minute, and preferably 1 second to 30 seconds, from the viewpoint of productivity.

In the present embodiment, in the step of producing the constituent unit, it is preferable to perform thermocompression bonding by passing one constituent unit between a pair of rolls (compression bonding rolls). The temperatures of the pair of rolls may be the same temperature or different temperatures. The width between the pair of rolls can be appropriately adjusted depending on the thickness of the constituent unit. Note that in the present embodiment, the thermocompression bonding step using rolls and the heat press bonding step may be performed in combination.

On the other hand, in a case where the metal layer (M) and the resin layer (P) are laminated with an adhesion aid film interposed therebetween, examples of the adhesion aid film include a coating film containing a low molecular weight compound having a weight-average molecular weight of 2000 or less as a main component.

The method for producing a metal-resin joined body may include, before the step of producing a constituent unit, (1) a step of subjecting the surface of at least one of the metal layer (M) or the resin layer (P) to surface treatment with a silane coupling agent treatment liquid, and (2) a step of laminating the resin layer (P) not subjected to surface treatment on the surface of the metal layer (M) subjected to surface treatment or laminating the metal layer (M) not subjected to surface treatment on the resin layer (P) subjected to surface treatment and performing thermocompression bonding. In the step (1), it is preferable to subject the surface of at least one selected from the metal layer (M) and the resin layer (P) to surface treatment with a silane coupling agent treatment liquid, and among these, it is preferable to subject the surface of the metal layer (M) to surface treatment with a silane coupling agent treatment liquid. Through such a step, an adhesion aid film containing a structural unit derived from the silane coupling agent as a main component is formed. Note that in a case of producing the constituent unit (PMP), both surfaces of the metal layer (M) may be subjected to surface treatment with a silane coupling agent treatment liquid.

The silane coupling agent treatment liquid to be used in the step (1) contains a silane coupling agent. The silane coupling agent is an organosilicon compound having an organic functional group and a hydrolyzable group such as an alkoxy group in one molecule. Examples of the silane coupling agent include epoxy group-containing compounds, such as 3-glycidoxypropylmethyldimethoxysilane, 3-glycidoxypropyltrimethoxysilane, 3-glycidoxypropylmethyldiethoxysilane, 3-glycidoxypropyltriethoxysilane, and 2-(3,4-epoxycyclohexyl)ethyltrimethoxysilane; vinyl group-containing compounds, such as vinyltrimethoxysilane and vinyltriethoxysilane; styryl group-containing compounds, such as p-styryltrimethoxysilane and p-styryltriethoxysilane; (meth)acryl group-containing compounds, such as 3-(meth)acryloxypropyltrimethoxysilane, 3-(meth)acryloxypropyltriethoxysilane, 3-(meth)acryloxypropylmethyldimethoxysilane, and 3-(meth)acryloxypropylmethyldiethoxysilane; amino group-containing compounds, such as 3-aminopropyltrimethoxysilane, 3-aminopropyltriethoxysilane, N-2-(aminoethyl)-3-aminopropyltrimethoxysilane, N-2-(aminoethyl)-3-aminopropyltriethoxysilane, N-2-(aminoethyl)-3-aminopropylmethyldimethoxysilane, N-2-(aminoethyl)-3-aminopropylmethyldiethoxysilane, 3-triethoxysilyl-N-(1,3-dimethylbutylidene)propylamine, N-phenyl-3-aminopropyltrimethoxysilane, and N-phenyl-3-aminopropyltriethoxysilane; isocyanurate group-containing compounds, such as tris(trimethoxysilylpropyl) isocyanurate and tris(triethoxysilylpropyl) isocyanurate; and mercapto group-containing compounds, such as 3-mercaptopropyltrimethoxysilane, 3-mercaptopropyltriethoxysilane, 3-mercaptopropylmethyldimethoxysilane, and 3-mercaptopropylmethyldiethoxysilane.

Among the above compounds, from the viewpoint of achieving both the adhesiveness to the metal layer (M) and the adhesiveness to the resin layer (P), an epoxy group-containing silane coupling agent, a double bond-containing silane coupling agent such as a vinyl group or a (meth)acryl group, and an amino group-containing silane coupling agent are more preferable. One silane coupling agent may be used alone, or two or more thereof may be used in combination.

The silane coupling agent is applied to the surface of the metal layer (M) or the resin layer (P) as a coating liquid in liquid form (silane coupling agent treatment liquid), and a drying step is preferably provided as necessary. The silane coupling agent treatment liquid preferably contains a solvent, and the silane coupling agent may be dissolved in the solvent or dispersed in the solvent.

The content of the silane coupling agent contained in the silane coupling agent treatment liquid is preferably 0.01 mass% or more, more preferably 0.05 mass% or more, and still more preferably 0.1 mass% or more, with respect to the total mass of the silane coupling agent treatment liquid. In addition, the content of the silane coupling agent is preferably 1 mass% or less, more preferably 0.8 mass% or less, and still more preferably 0.5 mass% or less, with respect to the total mass of the silane coupling agent treatment liquid.

The solvent contained in the silane coupling agent treatment liquid is not particularly limited, and either water or an organic solvent only needs to be used. Among them, from the viewpoint of environmental protection, aqueous coating liquid that uses water as a solvent is preferably used. The aqueous coating liquid may contain a small amount of an organic solvent. The specific amount of the organic solvent is preferably less than the amount of water on mass basis, and, for example, is preferably less than 30 mass%, more preferably less than 20 mass%, and still more preferably less than 10 mass%, with respect to the total mass of the solvent.

Examples of the organic solvent that is used in combination with water include alcohols, such as ethanol, isopropanol, ethylene glycol, and glycerin; ethers, such as ethyl cellosolve, t-butyl cellosolve, propylene glycol monomethyl ether, and tetrahydrofuran; ketones, such as acetone and methyl ethyl ketone; esters, such as ethyl acetate; and amines, such as dimethylethanolamine. One of these may be used alone, or a plurality thereof may be used in combination. Good stability and coatability of the aqueous coating liquid may be achieved by appropriately selecting these organic solvents and blending the organic solvent(s) as necessary.

As a method of applying the silane coupling agent treatment liquid to the surface of the metal layer (M) or the resin layer (P), for example, an application method known in the related art, such as air doctor coating, blade coating, rod coating, bar coating, knife coating, squeeze coating, impregnation coating, reverse roll coating, transfer roll coating, gravure coating, kiss roll coating, cast coating, spray coating, curtain coating, calender coating, or extrusion coating, can be used.

To improve the coatability or adhesiveness of the silane coupling agent treatment liquid, the surface of the metal layer (M) or the resin layer (P) may be subjected to surface treatment such as chemical treatment, corona discharge treatment, plasma treatment, ozone treatment, chemical treatment, or solvent treatment before the application of the silane coupling agent treatment liquid.

In the present embodiment, the application amount of the silane coupling agent treatment liquid is preferably 1 µm or more, more preferably 5 µm or more, and still more preferably 15 µm or more. The application amount of the silane coupling agent treatment liquid is preferably 30 µm or less, and more preferably 20 µm or less, as the application thickness in a wet state.

Accordingly, it is possible to produce a bus bar having a smaller thickness than an article in the related art, and a large amount of current can be applied, which can achieve high performance.

It is preferable to provide a drying step after the silane coupling agent treatment liquid is applied. The drying step is preferably a step of removing the solvent contained in the silane coupling agent treatment liquid. When the solvent is removed from the silane coupling agent treatment liquid, the surface of the metal layer (M) or the resin layer (P) is treated with the silane coupling agent. The silane coupling agent chemically bonds the metal layer (M) and the resin layer (P).

In the step (2) described above, the resin layer (P) not subjected to surface treatment is laminated on the surface of the metal layer (M) subjected to surface treatment in the step (1), or the metal layer (M) not subjected to surface treatment is laminated on the resin layer (P) subjected to surface treatment in the step (1), and the resultant is subjected to thermocompression bonding. Among these, the step (2) is preferably a step of laminating the resin layer (P) not subjected to surface treatment on the surface of the metal layer (M) subjected to surface treatment in the step (1), and performing thermocompression bonding.

In the thermocompression bonding step, it is preferable to perform heat press bonding or inter-roll thermocompression bonding. In particular, in the thermocompression bonding step, it is preferable that the thermocompression bonding is performed by passing one constituent unit between a pair of heating rolls (compression rolls). The temperatures of the pair of heating rolls may be the same temperature or different temperatures. The width between the pair of heating rolls can be appropriately adjusted depending on the thickness of the constituent unit. Note that in the present embodiment, the thermocompression bonding step (silane bonding) may be a compression bonding step using rolls, or may be the above-described heat press bonding step. Alternatively, the thermocompression bonding step using rolls and the above-described heat press bonding step may be performed in combination.

The method for producing a metal-resin joined body further includes a step of laminating the constituent units (PM) or the constituent units (PMP). In the present embodiment, it is preferable that the constituent units (PM) or the constituent units (PMP) are laminated, and then the heat press bonding is further performed.

In a case where the constituent units (PM) or the constituent units (PMP) are laminated and then further subjected to heat press bonding, the heat press bonding is preferably performed at a temperature of the melting point of the resin + 10°C or higher, and preferably the melting point of the resin + 20°C or higher. The time for performing heat press bonding is preferably 1 minute or longer, more preferably 2 minutes or longer, and still more preferably 3 minutes or longer. The time for performing heat press bonding is preferably 20 minutes or shorter, more preferably 15 minutes or shorter, and still more preferably 10 minutes or shorter.

In the step of laminating the constituent units (PM), a plurality of PM as the basic constituent units prepared is laminated (MP-MP-MP··) to produce a metal-resin joined body. Note that in the step of laminating PM, PM to be laminated last may be turned upside down or a metal layer may be further laminated to form a configuration of MP-MP-MP··M, and both outermost layers may be metal layers (M).

In the step of laminating the constituent units (PMP), a plurality of PMP as the basic constituent units prepared are laminated (PMP-PMP-PMP··) to produce a metal-resin joined body. Note that in the step of laminating PMP, metal layers may be further laminated as both surface layers to form a configuration of M-PMP-PMP-PMP··M, and both outermost layers may be the metal layers (M). In the present embodiment, the constituent unit (PM) and the constituent unit (PMP) may be laminated in combination.

### Configuration of Metal-Resin Joined Body

The metal-resin joined body has a constituent unit (PM) in which the resin layer (P) and the metal layer (M) are laminated or a constituent unit (PMP) in which the resin layer (P), the metal layer (M), and the resin layer (P) are laminated, as a basic constituent unit. In the present embodiment, n constituent units (PM) or n constituent units (PMP) are contained, and two or more metal layers (M) are contained. Here, n only needs to be an integer of 1 or more, and is preferably an integer of 2 or more, more preferably an integer of 3 or more, still more preferably an integer of 4 or more, still even more preferably an integer of 5 or more, and particularly preferably an integer of 6 or more. Note that the upper limit of n is not particularly limited, but n is preferably an integer of 50 or less, more preferably an integer of 40 or less, and still more preferably an integer of 30 or less, in a case where a thin bus bar is required. The metal-resin joined body of the present invention includes not only a metal-resin joined body formed by laminating the above-described constituent units, but also a metal-resin joined body formed by simply alternately laminating the resin layer (P) and the metal layer (M). In this case, it can be understood that the metal-resin joined body includes a plurality of constituent units (PM), and n is the number of constituent units (PM) contained when the constituent unit (PM) is regarded as one set.

For example, the metal-resin joined body of the present embodiment can be interpreted to include the following configurations.

Examples thereof include M(PM)n, M(PM)nP, P(PM)n, P(PM)nP, MP(PM)n, MP(PM)nP, (PMP)n, M(PMP)n, M(PMP)nP, M(PMP)nM, P(PMP)n, P(PMP)nP, P(PMP)nPM, P(PMP)nMP, MP(PMP)n, MP(PMP)nM, MP(PMP)nPM, PM(PMP)n, PM(PMP)nM, PM(PMP)nPM, and PM(PMP)nMP. The outermost layer of the metal-resin joined body is preferably selected as appropriate in consideration of, for example, the adhesiveness to a member constituting a portion in which the metal-resin joined body is incorporated.

In the above configuration, when two or more metal layers (M) are included, each of the metal layers (M) may have any configuration, and a combination of different metal layers (for example, a combination of copper and aluminum) may be used.

In the above configuration, in a case where two or more resin layers (P) are included, each of the layers may have any configuration, and different resins, blends of resins, and various additives may be used.

In the present embodiment, by adopting a configuration in which a plurality of resin layers and a plurality of metal layers are laminated in the thickness direction, the influence of the skin effect is suppressed, and by suppressing an energy loss due to an increase in inductance, a metal-resin joined body through which a large current can be applied can be produced.

The total thickness of the metal-resin joined body is preferably 0.5 mm or more, and more preferably 1.0 mm or more. On the other hand, the upper limit of the total thickness of the metal-resin joined body is preferably 5.0 mm or less, more preferably 4.0 mm or less, and still more preferably 3.0 mm or less.

As described above, the metal-resin joined body of the present invention can exhibit good electrical characteristics by setting the proportion of the resin layer (P) in the metal-resin joined body to be within a predetermined range while laminating the metal layer (M) as a constituent member thereof to laminate the constituent units of (PM)n in a multilayer manner (n = 1, 2, 3, 4 ···) in the thickness direction, thereby suppressing the influence of the skin effect and suppressing the energy loss due to an increase in inductance. In addition, heat dissipation from the metal layer can be promoted, and heat generation can be suppressed by appropriately controlling the total thickness of the metal-resin joined body and the thickness of the resin layer. Furthermore, the metal-resin joined body of the present embodiment has the resin layer, and thus, can be reduced in weight and has good bending workability.

### Bus Bar

The metal-resin joined body of the present embodiment is preferably for a bus bar. The present embodiment may also relate to a bus bar including the metal-resin joined body described above. The bus bar of the present embodiment is preferably used for various power module applications such as wiring between units and in a unit, such as a motor, an inverter, and a battery used in a hybrid electric vehicle (HEV) or an electric vehicle (EV) requiring a large capacity power supply; electric lines for substituting for main wiring of control boards used in industrial equipment and for power receiving boards; electric lines in large current devices for electrolytic purification, data centers (distributing power to server racks and other important equipment), renewable energy systems (distributing power generated by solar panels and wind turbines to power transmission networks and power storage systems in solar power generation and wind power generation equipment), transportation systems (distributing power to various parts of vehicles in various transportation systems such as trains, trams, and electric buses), and telecommunication equipment (distributing power to various components in telecommunication equipment and facilities).

In a case where the metal-resin joined body of the present embodiment is used as a bus bar, the bus bar preferably includes a main body portion having a plate shape or a rod shape and having at least one bendable portion, and a terminal portion provided on at least one end of the main body portion and seamlessly and integrally formed of the same material as the main body portion. The metal-resin joined body of the present embodiment has a feature of good workability because it is not necessary to weld or crimp a terminal portion of a separate member to the main body portion to form the terminal portion as in the related art. In addition, it is preferable that the bendable portion has at least one or more portions having flexibility to the extent that three-dimensional bending can be performed by edgewise bending, flatwise bending, or the like.

### Laminate for Producing Bus Bar

The present embodiment may relate to a laminate for producing a bus bar in which one resin layer (P) and one metal layer (M) are joined directly or with an adhesion aid film interposed therebetween. The present embodiment may also relate to a laminate for producing a bus bar in which another metal layer (M) is further joined onto the resin layer (P) directly or with an adhesion aid film interposed therebetween. That is, the laminate for producing a bus bar is a laminate consisting of the resin layer (P)/the metal layer (M) or a laminate consisting of the resin layer (P)/the metal layer (M)/the resin layer (P).

In the laminate for producing a bus bar of the present embodiment, the resin layer (P) and the metal layer (M) are preferably joined directly or with an adhesion aid film interposed therebetween. In a case where the resin layer (P) and the metal layer (M) are directly joined to each other, no other layer is present between the resin layer (P) and the metal layer (M). In addition, in the present specification, the adhesion aid film refers to a coating film provided between the resin layer (P) and the metal layer (M), and such a coating film is distinguished from an adhesive layer provided for joining the resin layer and the metal layer. Specifically, the thickness of the adhesion aid film is preferably 1 µm or less, more preferably 0.8 µm or less, still more preferably 0.6 µm or less, still even more preferably 0.5 µm or less, yet still even more preferably 0.3 µm or less, and particularly preferably 0.1 µm or less.

In the present embodiment, the adhesion aid film contains substantially no adhesive polymer contained in a so-called adhesive layer. More specifically, the weight average molecular weight of the component constituting the adhesion aid film is preferably 2000 or less, more preferably 1800 or less, still more preferably 1600 or less, and particularly preferably 1400 or less. As described above, the adhesion aid film of the present embodiment is preferably a coating film containing a low molecular weight compound as a main component, not a polymer.

The adhesion aid film preferably contains a structural unit derived from a silane coupling agent as a main component. Examples of the silane coupling agent include the above-described silane coupling agents.

### Examples

Next, the present invention will be described in more detail with reference to examples. However, the present invention is not limited to the examples described below.

### Test Example 1

### (1) Bending workability

The durability against bending in processing into the shape of a bus bar was evaluated according to the following evaluation criteria.

A case where neither peeling of the resin layer nor crack of the metal layer occurred and the processing was performed without any problem was determined as "A", and a case where a defect such as peeling or cracking occurred due to the processing was determined as "C".

### (2) Inductance measurement

A sample (metal-resin joined body) processed into a shape of a bus bar or a size of 10 mm × 100 mm was connected to an LCR meter, and an inductance value when an alternating current was applied was measured.

In a case where comparison was performed with the inductance value of the metal layer alone (each comparative example) taken as 100%, the inductance value of 50% or less was determined as "A", the inductance value of more than 50% and 90% or less was determined as "B", and the inductance value of more than 90% was determined as "C".

### (3) Adhesiveness between outermost layer and polyphenylene sulfide film

In Example 5 in which the outermost layer was the resin layer, a polyphenylene sulfide film of 0.05 mm was superimposed on the outermost layer of the resulting metal-resin joined body, and heat-pressed and fused by a vacuum heat press machine under conditions of a heating temperature of 320°C, a preheating time of 5 minutes, a pressing time of 5 minutes, and a pressure of 30 kgf/cm². Thereafter, a 180° peel test was performed with a width of 10 mm to evaluate the adhesiveness between the resin layer which is the outermost layer of the metal-resin joined body and the polyphenylene sulfide film. Note that in the peel test, the polyimide film of 0.025 mm was partially sandwiched between the two, and the end portion was not adhered and used as a grip margin in the peel test.

In a case where the polyphenylene sulfide film was cut without peeling at the fused portion, it was determined as "A" because there was sufficient adhesive force between the resin layer surface which was the outermost layer of the metal-resin joined body and the polyphenylene sulfide film.

Raw materials used in Test Example 1 are as follows.

### Resin Layer

### (Polyphenylene sulfide-based film)

(a) Copolymerized polyphenylene sulfide
   Thickness: 0.020 mm
(b) Laminate of copolymerized polyphenylene sulfide and polyphenylene sulfide
   Copolymerized polyphenylene sulfide/polyphenylene sulfide/copolymerized polyphenylene sulfide
   Thickness: 0.038 mm
   (Polyamide-based film)
(c) Nylon 6
   Thickness: 0.020 mm
   (Polypropylene-base film)
(d) Film in which the mixing ratio of polypropylene/maleic anhydride-modified polypropylene/styrene-olefin-based elastomer is 80/5/15 wt.%
   Thickness: 0.020 mm
   (Polyethylene-based film)
(e) Ultra-high molecular weight polyethylene thickness: 0.030 mm
   Adhesive Layer
(f) Ethylene-vinyl acetate copolymer film thickness: 0.030 mm
   Metal Layer
(g) Copper
   C1020P-1/4H thickness: 0.10 mm
(h) Copper
   C1020R-1/2H thickness: 0.10 mm
(i) Copper
   C1020R-1/2H thickness: 1.8 mm
(j) Copper
   C1020P-1/2H thickness: 2.0 mm
(k) Aluminum
   A1100P-H16 thickness: 0.27 mm, chromate phosphate treatment

### Example 1

Sixteen sheets of (g) as the metal layer and fifteen sheets of (a) as the resin layer were each cut into a A4 size, and they were alternately stacked in such a manner that both outermost layers were (g) as illustrated in FIG. 1. Thereafter, the resultant was heat-pressed by a heat press machine under conditions of a heating temperature of 270°C, a preheating time of 5 minutes, a pressing time of 5 minutes, and a pressure of 30 kgf/cm². In this manner, a metal-resin joined body including 15 constituent units (PM) in each of which the resin layer (P) and the metal layer (M) were laminated and further including the metal layer (M) as the outermost layer was produced. The metal-resin joined body was cut into a size of 10 mm × 100 mm, and silver paste was applied to the cross section to electrically connect the metal layers, followed by inductance measurement.

### Example 2

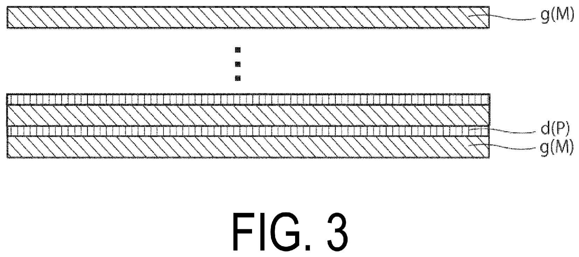

Sixteen sheets of the metal layer (g) and fifteen sheets of the resin layer (d) were each cut into a A4 size, and they were alternately stacked in such a manner that both outermost layers were (g) as illustrated in FIG. 3. Thereafter, the resultant was heat-pressed by a heat press machine under conditions of a heating temperature of 205°C, a preheating time of 5 minutes, a pressing time of 5 minutes, and a pressure of 30 kgf/cm². In this manner, a metal-resin joined body including 15 constituent units (PM) in each of which the resin layer (P) and the metal layer (M) were laminated and further including the metal layer (M) as the outermost layer was produced. The metal-resin joined body was cut into a size of 10 mm × 100 mm, and silver paste was applied to the cross section to electrically connect the metal layers, followed by inductance measurement.

### Example 3

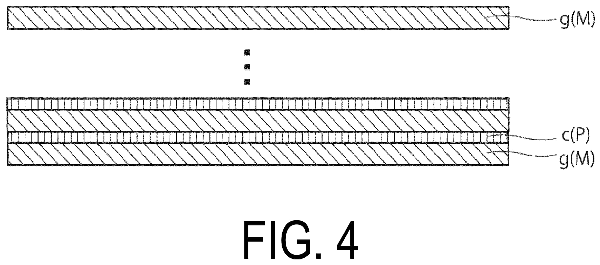

Ten sheets of (g) as the metal layer and nine sheets of (c) as the resin layer were each cut into a length of 270 mm and a width of 210 mm, and they were alternately stacked in such a manner that both outermost layers were (g) as illustrated in FIG. 4. Thereafter, the resultant was heat-pressed by a vacuum heat press machine under conditions of a heating temperature of 260°C, a preheating time of 5 minutes, a pressing time of 5 minutes, and a pressure of 30 kgf/cm². In this manner, a metal-resin joined body including 9 configurations (PM) in each of which the resin layer (P) and the metal layer (M) were laminated and further including the metal layer (M) as the outermost layer was produced. The metal-resin joined body was cut into a bus bar shape, and the cross section was subjected to soldering to electrically connect the metal layers, followed by inductance measurement.

### Example 4

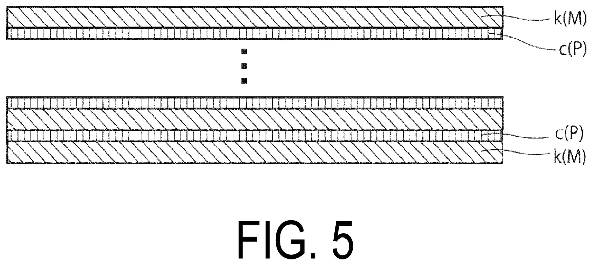

A hydrolyzed product of 3-aminopropyltriethoxysilane was mixed with water and ethanol to adjust the concentration to 0.15 wt.%, and then applied to one of the surfaces of each of the aluminum layers (k) constituting the metal layer to a thickness of 15 µm, and heated to dry water, thereby forming an adhesion aid film having a thickness of about 22 nm. A nylon 6 layer (c) as the resin layer was fed out with rolls onto the metal layer coated with 3-aminopropyltriethoxysilane, and was thermocompression-bonded between rolls in a range of 210°C to 260°C to produce a constituent unit (PM) in which the resin layer (P) and the metal layer (M) were laminated. Thereafter, the constituent unit (PM) was cut into a 270 mm square, and then seven sheets were stacked in such a manner that the aluminum layer and the nylon 6 layer were alternately arranged as illustrated in FIG. 5. Note that as the lamination direction of the seventh sheet, the resin layers were joined to each other so that both outermost layers were aluminum layers. Thereafter, the resultant was heat-pressed by a vacuum heat press machine under conditions of a heating temperature of 260°C, a preheating time of 5 minutes, a pressing time of 5 minutes, and a pressure of 50 kgf/cm². In this manner, a metal-resin joined body having a configuration in which the resin layers (P) and the metal layers (M) were laminated, and including 6 (PM), in which one metal layer (M) was laminated on the resin layer (P) side of (PM) at one end, and the resin layer (P) was sandwiched between (PM) and (PM) at the other end (when viewed from below, MP/MP/MP/MP/MP/MP/PM), was produced. The metal-resin joined body was cut into a bus bar shape, and the cross section was subjected to soldering to electrically connect the metal layers, followed by inductance measurement.

### Example 5

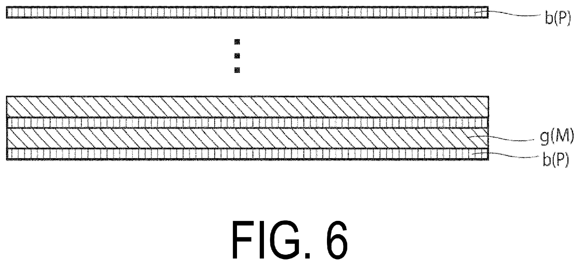

Nine sheets of (g) as the metal layer and ten sheets of (b) as the resin layer were each cut into a length of 270 mm and a width of 210 mm, and they were alternately stacked in such a manner that both outermost layers were (b) as illustrated in FIG. 6. Thereafter, the resultant was heat-pressed by a vacuum heat press machine under conditions of a heating temperature of 290°C, a preheating time of 5 minutes, a pressing time of 5 minutes, and a pressure of 30 kgf/cm². In this manner, a metal-resin joined body including nine configurations (PM) in which the resin layer (P) and the metal layer (M) were laminated and further including the resin layer (P) as the outermost layer was produced. The metal-resin joined body was cut into a bus bar shape, and the cross section was subjected to soldering to electrically connect the metal layers, followed by inductance measurement.

### Example 6

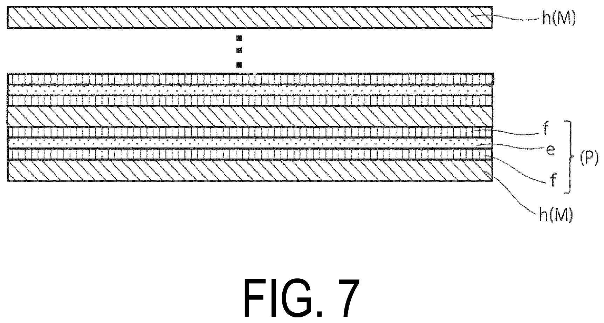

Eleven sheets of (h) as the metal layer, and ten sheets of (f)/(e)/(f) as the resin layer produced by stacking (f) as the adhesive layer and (e) as the intermediate layer were each cut into a A4 size, and they are alternately stacked in such a manner that both outermost layers were (h) as illustrated in FIG. 7. Thereafter, the resultant was heat-pressed by a heat press machine under conditions of a heating temperature of 160°C, a preheating time of 5 minutes, a pressing time of 5 minutes, and a pressure of 30 kgf/cm². In this manner, a metal-resin joined body including 10 constituent units (PM) in each of which the resin layer (P) including the adhesive layer and the metal layer (M) were laminated, and further including the metal layer (M) as the outermost layer was produced. The metal-resin joined body was cut into a size of 10 mm × 100 mm, and silver paste was applied to the cross section to electrically connect the metal layers, followed by inductance measurement.

### Comparative Example 1

Only (j) was cut into a size of 10 mm × 100 mm, followed by inductance measurement.

### [Comparative Example 2]

Only (i) was cut into a bus bar shape, followed by inductance measurement.

**[Table 1]**

| | Unit | Example 1 | Example 2 | Example 3 | Example 4 | Example 5 | Example 6 | Comparative Example 1 | Comparative Example 2 |
|---|---|---|---|---|---|---|---|---|---|
| Metal layer (M) | - | g | g | g | k | g | h | j | i |
| Thickness | mm | 0.1 | 0.1 | 0.1 | 0.27 | 0.1 | 0.1 | 2.0 | 1.8 |
| Resin layer (P) | - | a | d | c | c | b | f/e/f | - | - |
| Thickness | µm | 20 | 20 | 20 | 20 | 38 | 90 | - | - |
| Total thickness of metal-resin joined body (metal body) | mm | 1.9 | 1.9 | 1.18 | 2.03 | 1.28 | 2.0 | 2.0 | 1.8 |
| Total thickness of metal layer (M) with respect to total thickness of metal-resin joined body | % | 84.2 | 84.2 | 84.7 | 93.1 | 70.3 | 55.0 | - | - |
| Number of (PM)n (n) | - | 15 | 15 | 9 | 6 | 9 | 10 | - | - |
| Outermost layer | - | Copper | Copper | Copper | Aluminum | Resin | Copper | - | - |
| Heat pressing temperature | °C | 270 | 205 | 260 | 260 | 290 | 160 | - | - |
| Heat pressing time | min | 5 | 5 | 5 | 5 | 5 | 5 | - | - |
| Sample evaluation size | - | 10 mm × 100 m | 10 mm × 100 m | Bus bar shape | Bus bar shape | - | 10 mm × 100 m | 10 mm × 100 m | Bus bar shape |
| Bending workability | - | A | A | A | A | A | - | A | A |
| Inductance measurement value | nH | 36 | 59 | 3.5 | 6.8 | - | 83 | 69 | 19 |
| Degree of reduction in inductance value when compared with Comparative Example 1 | % | 52 | 86 | - | - | - | 120 | - | - |
| Degree of reduction in inductance value when compared with Comparative Example 2 | % | - | - | 18 | 36 | - | - | - | - |
| Evaluation of inductance measurement value | - | B | B | A | A | - | C | - | - |
| Adhesiveness between outermost layer and polyphenylene sulfide film | - | - | - | - | - | A | - | - | - |

In Examples, the bending workability was good, and in Example 5, particularly, the adhesiveness to polyphenylene sulfide was also good. In a case where the metal-resin joined body is used by being bonded to an external resin component (for example, a resin product injection-molded in advance), the outermost layer is particularly preferably a resin, and thus, it can be said that the result is good.

In addition, it was confirmed that in Examples, the metal-resin joined body was less likely to be affected by the skin effect and had favorable electrical characteristics.

Furthermore, the resin layer was provided as the constituent unit in each of Examples, and thus, there was an advantage that weight reduction is possible. On the other hand, Comparative Examples 1 and 2 were each the metal layer alone, and thus, the electrical characteristics were not good due to the influence of the skin effect.

Note that in Example 6, the adhesive layer was present, and thus, the thickness was increased by the thickness of the adhesive layer, which was disadvantageous for thinning, and the electrical characteristics as the metal-resin laminate were also slightly inferior.

In Examples 1 to 5, it was possible to significantly reduce the measured value of inductance in a high frequency region to flow a larger current, as compared with the metal alone which is an article in the related art, and the electrical characteristics were good. In particular, a current of a higher frequency is required for large-capacity and high-speed communication. The skin effect has a larger influence at a higher frequency, and thus it is very useful that the effect is large in a higher frequency region such as 100 kHz or higher, and contribution to the electronics field can be expected from now on.

Furthermore, the reduction in inductance leads to a reduction in switching loss which has been a problem in the field of electric circuits, and thus, energy saving measures, component miniaturization, and a longer life of electronic components can be expected.

### Industrial Applicability

The metal-resin joined body of the present invention suppresses the skin effect, allows a large current to flow therethrough even in the case of an alternating current, can be reduced in weight, and has good bending workability. For example, the metal-resin joined body of the present invention is suitable for various power module applications such as wiring between units and within a unit such as a motor, an inverter, and a battery used in a hybrid electric vehicle (HEV) or an electric vehicle (EV) requiring a large capacity power source; electric lines for substituting for main wiring of control boards used in industrial equipment and for power receiving boards; and electric lines in large current devices for electrolytic purification, and the industrial value thereof is high.

### Reference Signs List

a Resin layer (copolymerized polyphenylene sulfide)
b Resin layer (laminate of copolymerized polyphenylene sulfide and polyphenylene sulfide)
c Resin layer (nylon 6)
d Resin layer (mixed layer of polypropylene/maleic anhydride-modified polypropylene/styrene-olefin-based elastomer)
e Resin layer (polyethylene)
f Resin layer (ethylene-vinyl acetate copolymer film)
g Metal layer (copper)
h Metal layer (copper)
k Metal layer (aluminum)

## Claims

1. A metal-resin joined body comprising n (where n is an integer of 1 or more) constituent units (PM) in each of which a resin layer (P) and a metal layer (M) are laminated, or n constituent units (PMP) in each of which a resin layer (P), a metal layer (M), and a resin layer (P) are laminated,
wherein
two or more metal layers (M) are included in the metal-resin joined body.

2. The metal-resin joined body according to claim 1, wherein a total thickness of the metal layers (M) is 56% or more with respect to a total thickness of the metal-resin joined body.

3. The metal-resin joined body according to claim 1, wherein in the constituent unit (PM) or the constituent unit (PMP), the resin layer (P) and the metal layer (M) are joined directly or with an adhesion aid film interposed therebetween.

4. The metal-resin joined body according to claim 3, wherein the adhesion aid film has a thickness of 1 µm or less.

5. The metal-resin joined body according to claim 3, wherein a weight-average molecular weight of a component constituting the adhesion aid film is 2000 or less.

6. The metal-resin joined body according to claim 3, wherein the adhesion aid film contains a structural unit derived from a silane coupling agent as a main component.

7. The metal-resin joined body according to claim 1, wherein an inductance value when an alternating current of 100 kHz is applied is 90% or less, as compared with an inductance value when an alternating current of 100 kHz is applied to the metal layer alone.

8. The metal-resin joined body according to claim 1, wherein the metal layer (M) contains copper or a copper alloy.

9. The metal-resin joined body according to claim 1, wherein the metal layer (M) contains aluminum or an aluminum alloy.

10. The metal-resin joined body according to claim 1, wherein the resin layer (P) contains a polyphenylene sulfide-based resin as a main component.

11. The metal-resin joined body according to claim 1, wherein the resin layer (P) contains a polyamide-based resin as a main component.

12. The metal-resin joined body according to claim 1, wherein the resin layer (P) contains a polypropylene-based resin as a main component.

13. The metal-resin joined body according to claim 1, wherein the resin layer (P) has a thickness of 1 to 100 µm for one layer.

14. The metal-resin joined body according to claim 1, wherein the metal layer (M) has a thickness of 0.05 to 2.0 mm for one layer.

15. The metal-resin joined body according to claim 1, wherein a total thickness of the metal-resin joined body is 0.5 mm or more.

16. The metal-resin joined body according to claim 1, wherein the metal-resin joined body is for a bus bar.

17. A bus bar comprising the metal-resin joined body described in any one of claims 1 to 16.

18. A method for producing the metal-resin joined body described in any one of claims 1 to 16, the method comprising
subjecting a metal layer (M) and a resin layer (P) to thermocompression bonding directly or with an adhesion aid film interposed therebetween to produce a constituent unit (PM) or a constituent unit (PMP).

19. The method for producing the metal-resin joined body according to claim 18, the method comprising:
(1) subjecting a surface of at least one of the metal layer (M) or the resin layer (P) to surface treatment with a silane coupling agent treatment liquid to form an adhesion aid film; and
(2) laminating the resin layer (P) not subjected to surface treatment on the surface of the metal layer (M) subjected to surface treatment, or laminating the metal layer (M) not subjected to surface treatment on the resin layer (P) subjected to surface treatment, and performing thermocompression bonding.

20. The method for producing the metal-resin joined body according to claim 18, the method further comprising laminating the constituent unit (PM) or the constituent unit (PMP).

21. A laminate for producing a bus bar, the laminate comprising one resin layer (P) and one metal layer (M) joined directly or with an adhesion aid film interposed therebetween.

22. The laminate for producing a bus bar according to claim 21, the laminate further comprising another metal layer (M) joined onto the resin layer (P) directly or with an adhesion aid film interposed therebetween.

23. The laminate for producing a bus bar according to claim 21, wherein the resin layer (P) and the metal layer (M) are joined with an adhesion aid film interposed therebetween, and
the adhesion aid film has a thickness of 1 µm or less.

24. The laminate for producing a bus bar according to claim 21, wherein a weight-average molecular weight of a component constituting the adhesion aid film is 2000 or less.

25. The laminate for producing a bus bar according to claim 21, wherein the adhesion aid film contains a structural unit derived from a silane coupling agent as a main component.
